# EUROPEAN PATENT APPLICATION

(11) **EP 4 560 779 A1**
(43) Date of publication of application: **28.05.2025**
(21) Application number: 23211661.6
(22) Date of filing: 23.11.2023
(51) Int. Cl.: H01M 10/48, G01F 23/22, H01M 50/569

(54) **AN ELECTRIC ENERGY STORAGE MODULE WITH LIQUID DETECTION**

(71) Applicant: VOLVO TRUCK CORPORATION, 405 08 Göteborg (SE)
(72) Inventor: LIDSTRÖM, Emil, SE-423 56 TORSLANDA (SE)
(74) Representative: Kransell & Wennborg KB

(57) **Abstract**

An electrical energy storage module (100) comprising: multiple electrical energy storage cells (102) arranged next to each other in a stacking direction (104), a measurement circuit (108) arranged on a substrate (110) on a top side (112) of the stack of multiple electrical energy storage cells for connection to electrodes (116) of the multiple electrical energy storage cells (102), wherein, a portion (120) of the substrate of the measurement circuit extends downwards on a side surface (122) of the stack of multiple electrical energy storage cells, the side surface extending away from the top surface, the portion of the substrate comprising at least two conducting surfaces (124, 126) electrically connected with the measurement circuit, and the measurement circuit (108) is configured to detect a variation in electrical resistance between the at least two conducting surfaces (124, 126) caused by a liquid next to the electrical energy storage module.

## Description

### TECHNICAL FIELD

The disclosure relates generally to electrical energy storage systems. In particular aspects, the disclosure relates to an electrical energy storage module with liquid detection. The disclosure can be applied to heavy-duty vehicles, such as trucks, buses, and construction equipment, and marine vessels among other vehicle types as well as stationary applications. Although the disclosure may be described with respect to a particular vehicle, the disclosure is not restricted to any particular vehicle.

### BACKGROUND

Electrical energy storages may include multiple electrical energy storage modules which may store large amounts of energy. Coolant or other liquids may leak into an electrical energy storage module, causing corrosion and/or thermal runaway events.

Faults that cause thermal runaway events may lead to hazardous situations such as fire. For increased safety, it is therefore important to monitor the condition of the electrical energy storage modules and provide suitable warnings in the event of detected potentially risky conditions of the electrical energy storage modules.

### SUMMARY

According to a first aspect of the disclosure, there is provided an electrical energy storage module comprising: multiple electrical energy storage cells arranged next to each other in a stacking direction, a measurement circuit arranged on a substrate on a top side of the stack of multiple electrical energy storage cells for connection to electrodes of the multiple electrical energy storage cells, wherein, a portion of the substrate of the measurement circuit extends downwards on a side surface of the stack of multiple electrical energy storage cells, the side surface extending away from the top surface, the portion of the substrate comprising at least two conducting surfaces electrically connected with the measurement circuit, and the measurement circuit is configured to detect a variation in electrical resistance between the at least two conducting surfaces caused by a liquid next to the electrical energy storage module.

The first aspect of the disclosure may seek to detect liquid such as coolant leakage, water ingress, or high humidity in an electrical energy storage module. A technical benefit may include improved ability to provide early warnings to an operator to thereby improve safety for users and operators as well as for surrounding objects and buildings. Since the portion of the substrate comprising the at least two conducting surfaces extend downwards, the liquid can be detected before it can reach the electrodes, or poles, and other electric circuitry of the measurement circuit on the top side of the stack.

Optionally in some examples, including in at least one preferred example, the substrate may be flexible. A technical benefit may include that a single substrate can be used that is bent or formed through the edge of the cells to reach both the top side and the side surface of the stack of cells. This advantageously keeps the number of components low, potentially reducing cost, as well as reducing risk of electrical faults due to additional electrical connectors.

Optionally in some examples, including in at least one preferred example, the substrate may be a flexible printed circuit board.

Optionally in some examples, including in at least one preferred example, the portion of the substrate may comprise: at least three conducting surfaces, where at least two of the at least three conducting surfaces are arranged at different distances from an end portion of the substrate. A technical benefit may include that different levels of liquid can be detected which further provides the ability to issue different warnings depending on the level of liquid.

Optionally in some examples, including in at least one preferred example, the substrate may be arranged on a plurality of the electrical energy storage cells and is folded from the top side to the side surface of the electrical energy storage module. A technical benefit may include that fewer substrate parts may be used thereby leading to easier assembly of the measurement circuit.

Optionally in some examples, including in at least one preferred example, the top side may be adapted to be arranged substantially horizontal and the side surface is adapted to be arranged substantially vertically. A technical benefit may include that detecting liquid at a suitable level is facilitated with the side surface arranged substantially vertically.

Optionally in some examples, including in at least one preferred example, the measurement circuit may be connectable to a control system that is configured to receive measurement signals indicative of the variation in electrical resistance. A technical benefit may include that the measurement signals may be evaluated so that more advanced analysis may be performed to improve the accuracy of the warnings. The control system may be a processing circuitry of a computer system.

Optionally in some examples, including in at least one preferred example, the electrical energy storage module may comprise an electrical connection part connecting the conducting surfaces and the measurement circuit on the top side of the multiple electrical energy storage cells, the electrical connection part being a high-ohmic part. A technical benefit may include that the components on the side surface is less likely to contribute to isolation faults in the measurement circuit.

Optionally in some examples, including in at least one preferred example, the at least two conducting surfaces may be fully exposed metal surfaces. A technical benefit may include improved contact with liquids.

There is further provided a vehicle comprising the electrical energy storage module according to the first aspect.

According to a second aspect of the disclosure, there is provided a method for detecting a liquid around an electrical energy storage module comprising multiple electrical energy storage cells arranged next to each other in a stacking direction, and a measurement circuit comprising a substrate arranged on a top side of the multiple electrical energy storage cells for connection to electrodes of the multiple electrical energy storage cells, the method comprising: providing the substrate with a portion that extends downwards on a side surface of the electrical energy storage module, the side surface extending away from the top surface, the portion of the substrate comprising at least two conducting surfaces electrically connected with the measurement circuit, detecting a variation in electrical resistance between the at least two conducting surfaces, and take action depending on the type of variation in the electrical resistance.

The second aspect of the disclosure may seek to detect coolant leakage, water ingress, or high humidity in an electrical energy storage module. A technical benefit may include improved the ability to provide early warnings to an operator to thereby improve safety for users and operators as well as for surrounding objects and buildings of the electrical energy storage module. Since the portion of the substrate comprising the at least two conducting surfaces extend downwards, the liquid can be detected before it can reach the electrodes, or poles, and other electric circuitry of the measurement circuit on the top side of the stack.

Optionally in some examples, including in at least one preferred example, take action may include at least one of warn a user, discharging the electrical energy storage cells, and close coolant valves of a cooling system for the electrical energy storage cells, and store and fault code.

Optionally in some examples, including in at least one preferred example, the portion of the substrate may comprise a plurality of pairs of conducting surfaces arranged at different distances from an end portion of the substrate, the method comprising: determining a liquid level depending on evaluating a variation in resistance in each pair of the conducting surfaces. A technical benefit may include the that different levels of liquid can be detected which further provides the ability to issue different warnings depending on the level of liquid.

According to a third aspect of the disclosure, there is provided a computer-implemented method, comprising: detecting, by processing circuitry of a computer system, at least one variation in electrical resistance between at least two conducting surfaces of a substrate portion that extends downwards on a side surface of an electrical energy storage module comprising multiple electrical energy storage cells arranged next to each other in a stacking direction, the side surface extending away from a top surface of the stack of multiple electrical energy storage cells, evaluating, by the processing circuitry, at least one variation in electrical resistance in comparison to predetermined criteria, and providing control signals, by processing circuitry, to take action depending on the type of variation in the electrical resistance.

The third aspect of the disclosure may seek to detect coolant leakage, water ingress, or high humidity in an electrical energy storage module. A technical benefit may include improved the ability to provide early warnings to an operator to thereby improve safety for users and operators as well as for surrounding objects and budlings of the electrical energy storage module. Since the portion of the substrate comprising the at least two conducting surfaces extend downwards, the liquid can be detected before it can reach the electrodes, or poles, and other electric circuitry of the measurement circuit on the top side of the stack.

Optionally in some examples, including in at least one preferred example, the control signals may be provided to at least one of a system configured to warn a user, discharging the electrical energy storage cells, close coolant valves of a cooling system for the electrical energy storage cells, and store a fault code.

Optionally in some examples, including in at least one preferred example, the portion of the substrate may comprise a at least three conducting surfaces where at least two of the at least three conducting surfaces are arranged at different distances from an end portion of the substrate, the method comprising: determining a liquid level depending on evaluating a variation in resistance between a reference conducting surface and the other two conducting surfaces. A technical benefit may include the that different levels of liquid can be detected which further provides the ability to issue different warnings depending on the level of liquid.

Optionally in some examples, including in at least one preferred example, the action may depend on the determined liquid level. A technical benefit may include that the warning may be tailored to the severeness to the determined liquid level.

There is further provided a computer program product comprising program code for performing, when executed by the processing circuitry, the method of the third aspect.

There is further provided a non-transitory computer-readable storage medium comprising instructions, which when executed by the processing circuitry, cause the processing circuitry to perform the method of the third aspect.

According to a fourth aspect of the disclosure, there is provided a computer system comprising processing circuitry configured to: detect at least one variation in electrical resistance between at least two conducting surfaces of a substrate portion of a measurement circuit that extends downwards on a side surface of an electrical energy storage module comprising multiple electrical energy storage cells arranged next to each other in a stacking direction, the side surface extending away from the top surface where the measurement circuit is connected to electrodes of the multiple electrical energy storage cells, evaluate at least one variation in electrical resistance in comparison to predetermined criteria, and provide control signals to electrical energy control systems to take an action depending on the type of variation in the electrical resistance.

The fourth aspect of the disclosure may seek to detect coolant leakage, water ingress, or high humidity in an electrical energy storage module. A technical benefit may include improved the ability to provide early warnings to an operator to thereby improve safety for users and operators as well as for surrounding objects and budlings of the electrical energy storage module. Since the portion of the substrate comprising the at least two conducting surfaces extend downwards, the liquid can be detected before it can reach the electrodes, or poles, and other electric circuitry of the measurement circuit on the top side of the stack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary electrical energy storage module according to an example.
**FIG. 2** is a side view of an exemplary electrical energy storage module according to an example.
**FIG. 3** is an example vehicle.
**FIG. 4** is a flow chart of a method according to an example.
**FIG. 5** is another view of **FIG. 1**, according to an example.
**FIG. 6** is a computer system and an electrical energy storage module according to an example.
**FIG. 7** is a flow chart of a method according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Electrical energy storage systems with high energy content need to be monitored to ensure safe operation. One potential source of failure in electrical energy storage systems is exposure to humidity. High humidity, such as caused by coolant leakage, condensation, or water ingress into casings of an electrical energy storage module comprising electrical energy storage cells may lead to corrosion or short circuits and potentially thermal runaway which may evolve into hazardous situations such as fire. The present disclosure provides a way to detect high humidity situations in an electrical energy storage module at an early stage.

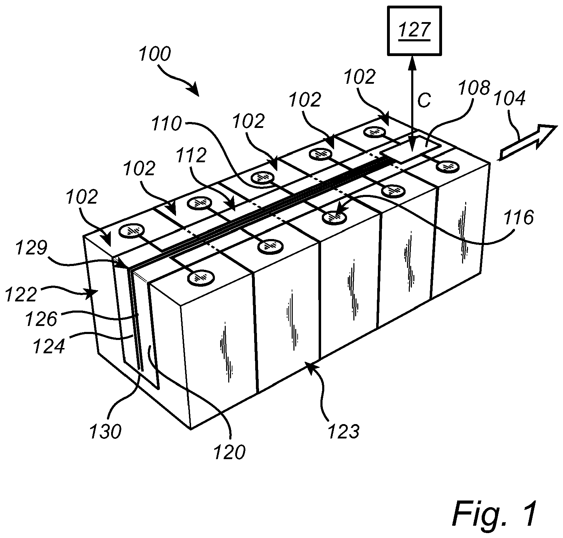

**FIG. 1** is an exemplary electrical energy storage module 100 according to an example.

The electrical energy storage module 100 comprises multiple electrical energy storage cells 102 arranged next to each other in a stacking direction 104. The electrical energy storage cells 102 are based on a cell chemistry and may for example be Li-ion cells although other cell chemistries or types are also envisaged such as solid-state cells. The electrical energy storage cells 102 may be electrically connected in series and/or parallel in the electrical energy storage module 100 such that they collectively provide a voltage output from the electrical energy storage module 100. An example voltage output is in the range of 12V to 300V, but other voltage outputs, e.g., higher, are also envisaged depending on the application at hand. Each of the electrical energy storage cells 102 comprises electrodes 116, such as a positive pole and a negative pole.

A measurement circuit 108 is arranged on a substrate 110 on a top side 112 of the stack of multiple electrical energy storage cells 102. The substrate 110 includes suitable leads and wiring for connection to the electrodes 116 of the multiple electrical energy storage cells 102. The measurement circuit 108 is electrically connected to the electrodes 116 by the wiring in the substrate 110. In this way the measurement circuit 108 may measure the voltage of the cells 102 of the electrical energy storage module 100.

The measurement circuit 108 may be configured in different ways. In one possible implementation, the measurement circuit 108 comprises an analogue front end (AFE) chip and associated passive components. However, it is also envisaged that the measurement circuit 108 is configured to provide cell voltages and temperature measurements to a connector and that e.g. an AFE chip and other components are located elsewhere.

The measurement circuit 108 may also be involved in actuating electric current for balancing the cells 102.

In one optional example, the substrate 110 is flexible, such as a flexible printed circuit board, PCB. The flexible substrate 110 should be flexible enough to bend through 90 degrees so that it can bend from the top side 112 to the side surface 122. Alternatively, the substrate 110 is stiff but with the 90 degrees bend. That is, the 90 degrees bend is provided during manufacturing of the substrate 110.

The substrate 100 may comprise 90 degrees bend that allows is to reach between the top side 112 and the side surface 122.

A substrate may be made from a flexible polymer, or it may be molded into the correct shape. A flexible substrate is better at absorbing relative motions of the electrical energy storage cells 102.

Furthermore, a portion 120 of the substrate 110 for the measurement circuit 108 extends downwards on a side surface 122 of the stack of multiple electrical energy storage cells 102. The side surface 122 is here facing in a direction substantially parallel to the stacking direction 104 and extends away from the top surface 112 of the stack of multiple electrical energy storage cells 102. The substrate 110 is arranged on a plurality of the electrical energy storage cells 102 and is folded from the top side 112 to the side surface 122 of the electrical energy storage module 100.

It is envisaged that the portion 120 of the substrate 110 extends downwards on another side surface than the side surface 122. For example, the portion 120 may extend downwards on side surface 123 of any one of the cells 102. The side surface 123 facing perpendicular to the stacking direction 104. In some example, one or more portions of the substrate 110 extends downwards on a first side surface 122 facing parallel to the stacking direction 104 and a second side surface 123 facing perpendicular to the stacking direction 104. The planes of the first side surface 122 and the second side surface 123 being perpendicular to each other.

The substrate 110 may be welded to the cell terminals 116 or the busbar connecting the cell terminals 116. Alternatively, the substrate 110 may be glued to the electrical energy storage cells 102.

The portion 120 of the substrate 110 comprises at least two conducting surfaces 124, 126. The measurement circuit 108 is configured to detect a variation in electrical resistance between the at least two conducting surfaces 124, 126 caused by a liquid next to the electrical energy storage module. The at least two conducting surfaces 124, 126 may be fully exposed metal surfaces to facilitate detection of liquids, and may be provided as leads on the substrate portion 120.

The variation in electrical resistance is evaluated in order to conclude whether or not a liquid is present, and in contact with the at least two conducting surfaces 124, 126. The electrical resistance would be at a relatively high value in normal conditions, that is, with no or very low humidity, under normal operation conditions. In the case of coolant leakage, water ingress, or other events that lead to a relatively high humidity, a diagnostic function, either operable in the measurement circuit 108 or in a separate processing capacity elsewhere, is configured to detect a decrease in the resistance. If the resistance is detected below a pre-defined resistance threshold, it is concluded that too high humidity is present at the electrical energy storage module 100. The resistance threshold may be calibrated by simulation and testing with different kinds of liquids.

A variation in electrical resistance may be either a relative drop in resistance, or that the resistance falls below a pre-defined threshold.

Furthermore, the evaluation based on determining whether the electrical resistance is a "very high" resistance (open circuit) or a "very low" resistance (short circuit) indicating a fault with the sensor setup rather than a leakage. The "very low" resistance may be based on different types of liquids but should be configured to capture the range of plausible liquids, such as water and coolants.

Preferably, in practical implementation, the top side 112 is adapted to be arranged substantially horizontal and the side surface 122 is adapted to be arranged substantially vertically. This allows for a liquid to not reach the conducting surfaces 124, 126 until the liquid level is at a predetermined level.

The measurement circuit 108 may be connectable to a control system 127 that is configured to receive measurement signals indicative of the variation in electrical resistance. The control system 127 may receive control signals C from the measurement circuit 108 indicating the variation in resistance, wherein the control system 127 is configured to trigger a suitable action depending on the type of variation in the electrical resistance. Actions include for example to warn a user, discharging the electrical energy storage cells 102, and close coolant valves of a cooling system for the electrical energy storage cells 102.

To reduce the risk of the bare metal surfaces 124, 126 contributing to isolation fault between electrical energy storage cells 102 and a chassis in case of coolant leakage or water ingress or high humidity, the electrical energy storage module 100 comprises an electrical connection part 129 that connects the conducting surfaces 124, 126 and the measurement circuit 108 on the top side 112 of the multiple electrical energy storage cells 102, the electrical connection part being a high-ohmic part 129. The resistance of the high-ohmic part 129 in series with the measurement circuit 108 should be substantially higher than 100kOhm, such as 1 MegaOhm (MOhm). The high-ohmic part 129 further provides a voltage/resistor divider to facilitate a measurement of the variation in resistance between the metal surfaces 124, 126. The high-ohmic part may for example be a high ohmic material molded into a part of PCB or flexible film rather than a metallic medium.

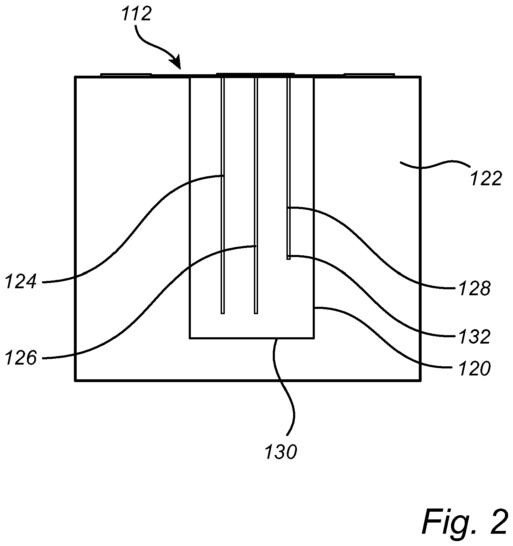

**FIG. 2** illustrates a portion 120 of the substrate 110 that is configured to extend downwards on a side surface 122 of the electrical energy storage module 100. The conducting surfaces 124, 126 reach towards an end portion 130 at the lowermost end of the substate portion 120. Further, a third conducting surface 128 is included on the substrate portion 120. At least two, here surface 124 and 126 of the at least three conducting surfaces 124, 126, 128 are arranged at different distances from the end portion 130 of the substrate.

If a liquid next to the module reaches a level such that the two lowermost conducting surfaces 124, 126 get in contact with the liquid, then the resistance between the two lowermost conducting surfaces 124, 126 will change significantly. If the conducting surfaces 124, 126 are bare metal surfaces, the resistance will drop to near that of the liquid, possibly shorting the conducting surfaces 124, 126. This dop in resistance indicates a liquid level that reaches at least to the conducting surfaces 124, 126, from the end portion 130. However, if the resistance between any one of the conducting surfaces 124, 126, for example using the conducting surface 124 as the reference, and the conducting surface 128, has not yet varied, then it can be concluded that the liquid level has not yet reached the conducting surface 128 which does not extend as far towards the end portion 130 as the other two conducting surfaces 124, 126. Once the resistance between the conducting surface 124 as the reference and the conducting surface 128 varies, it can be concluded, for example by the control system 127 or a processing circuitry, that the liquid level has reached the lower level 132 of the conducting surface 128.

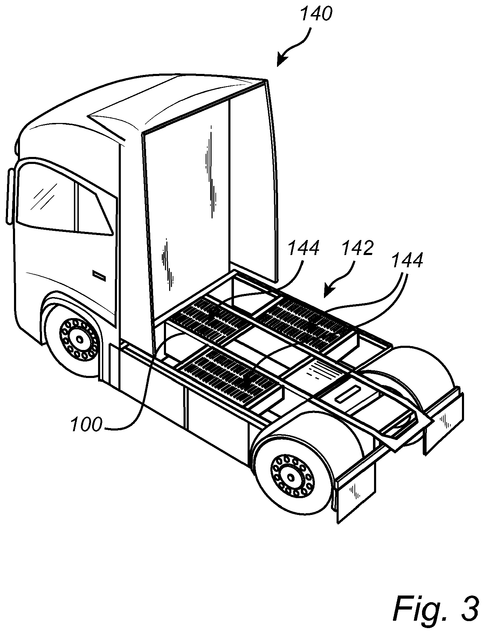

**FIG. 3** is an example vehicle 140 according to embodiments of the present disclosure. The vehicle 140 is here shown as a heavy-duty truck but other types of vehicles are also applicable. The vehicle 140 comprises a hybrid-, or fully electric driveline that is powered by an electrical energy storage system 142 comprising multiple parallel connected electrical energy storage pack 144. Each electrical energy storage pack 144 comprises a plurality of electrical energy storage modules 100.

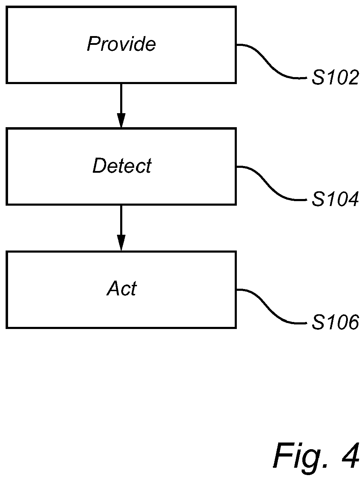

**FIG. 4** is a flow-chart of method steps according to an example. The method is for detecting a liquid around an electrical energy storage module 100 comprising multiple electrical energy storage cells 102 arranged next to each other in a stacking direction 104, and a measurement circuit 108 comprising a substrate 110 arranged on a top side 112 of the multiple electrical energy storage cells 102 for connection to electrodes of the multiple electrical energy storage cells 102.

The method comprises step S 102 of providing the substrate 110 with a portion 120 that extends downwards on a side surface 122 of the electrical energy storage module 100. The side surface 122 extending away from the top surface 112 and the portion 120 of the substrate comprising at least two conducting surfaces 124, 126.

In step S104 detecting a variation in electrical resistance between the at least two conducting surfaces 124, 126, and take action, in step S 106 depending on the type of variation in the electrical resistance. Take action, or act, includes at least one of warn a user, discharging the electrical energy storage cells, close coolant valves of a cooling system for the electrical energy storage cells, and storing a fault code. The fault code may be used for correction of the fault at next service or for following up electrical energy storage status in online data analysis.

As shown in fig. 2, the portion 120 of the substrate 110 comprises a at least three conducting surfaces 124, 126, 128 where at least two of the at least three conducting surfaces are arranged at different distances from an end portion 130 of the substrate 110. To take advantage of this, the method comprises determining a liquid level depending on evaluating a variation in resistance between a reference conducting surface 124 and the other two conducting surfaces 126, 128.

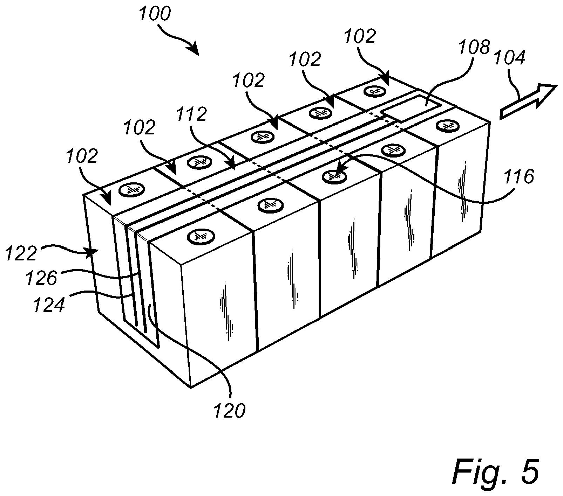

**FIG. 5** is an exemplary electrical energy storage module 100 according to an example. The electrical energy storage module 100 comprises multiple electrical energy storage cells 102 arranged next to each other in a stacking direction 104, a measurement circuit 108 arranged on a substrate 110 arranged on a top side 112 of the stack of multiple electrical energy storage cells for connection to electrodes 116 of the multiple electrical energy storage cells 102, wherein, a portion 120 of the substrate of the measurement circuit extends downwards on a side surface 122 of the stack of multiple electrical energy storage cells, the side surface extending away from the top surface, the portion of the substrate comprising at least two conducting surfaces 124, 126 electrically connected with the measurement circuit, and the measurement circuit 108 is configured to detect a variation in electrical resistance between the at least two conducting surfaces 124, 126 caused by a liquid next to the electrical energy storage module.

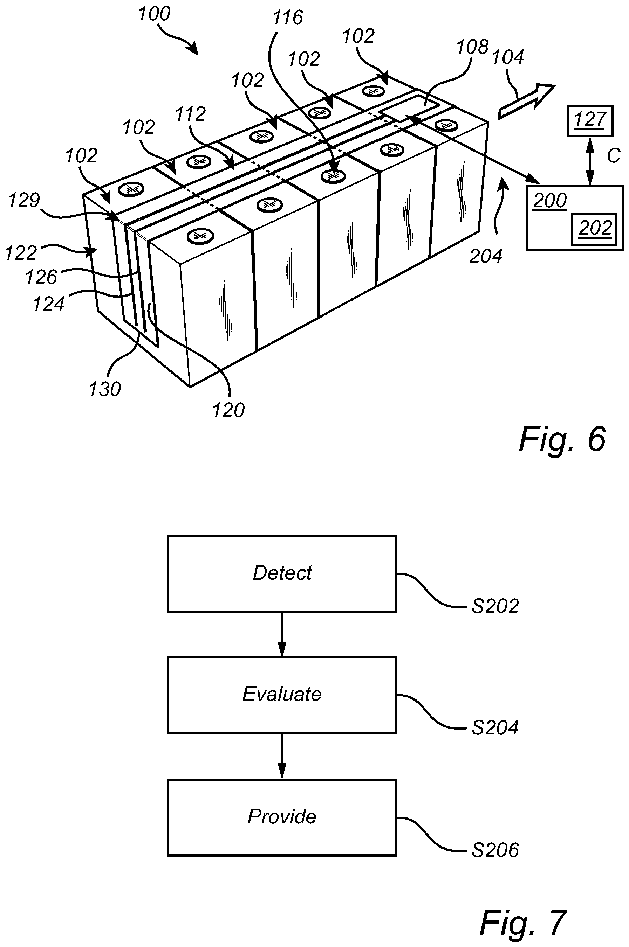

**FIG. 6** is an exemplary system diagram of a computer system 200 according to an example. The computer system 200 comprising processing circuitry 202 configured to: detect at least one variation in electrical resistance between at least two conducting surfaces 124, 126 of a substrate portion 120 of a substrate 110 that extends downwards on a side surface of an electrical energy storage module 100 comprising multiple electrical energy storage cells 102 arranged next to each other in a stacking direction 104, the side surface 122 extending away from the top surface 112 where the processing circuitry may be connected to electrodes 116 of the multiple electrical energy storage cells 102.

The processing circuitry 202 is configured to evaluate at least one variation in electrical resistance in comparison to predetermined criteria and provide control signals C to electrical energy control systems 127 to take an action depending on the type of variation in the electrical resistance. The predetermined criteria may be a threshold for a resistance drop. The predetermined criteria may be related to between which conducting surfaces a resistance drop occurs.

In some examples, the measurement circuit 108 comprises an AFE (analog front end) chip. The AFE may be mounted on the substrate 108 or connected to a small PCB that is connected to the substrate 108 through a connector. The measurement circuit 108, or the AFE, is connected to the processing circuitry 202 through a communication protocol 204, such as isolated SPI or CAN etc., and a set of wires or other conductors.

The processing circuitry 202 reads voltages from the measurement circuit 108, i.e. from the AFE and determines cell voltages, and optionally temperatures and potential errors based on the voltage measurements. As mentioned above, the processing circuitry 202 also determines the electrical resistance between the conducting surfaces 124 and 126.

However, it is envisaged that the AFE is mounted somewhere else, that is away from the module 100 and connected to the circuit 108 via a harness or FPCB.

Still further, the measurement circuit 108 may comprise a processing circuity to perform the above steps to detect at least one variation in electrical resistance between at least two conducting surfaces 124, 126.

**FIG. 7** is a flow chart of a computer-implemented method according to an example.

In step S202, detecting, by processing circuitry of a computer system, at least one variation in electrical resistance between at least two conducting surfaces of a substrate portion of a substrate extends downwards on a side surface of an electrical energy storage module comprising multiple electrical energy storage cells arranged next to each other in a stacking direction, the side surface extending away from a top surface of the stack of multiple electrical energy storage cells.

In step S204, evaluating, by the processing circuitry, at least one variation in electrical resistance in comparison to predetermined criteria.

In step S206, providing control signals, by processing circuitry, to take action depending on the type of variation in the electrical resistance.

The control signals are provided to at least one of a system configured to warn a user, discharging the electrical energy storage cells, and close coolant valves of a cooling system for the electrical energy storage cells.

The portion of the substrate comprises a at least three conducting surfaces where at least two of the at least three conducting surfaces are arranged at different distances from an end portion of the substrate, the method comprising: determining a liquid level depending on evaluating a variation in resistance between a reference conducting surface and the other two conducting surfaces.

The action may depend on the determined liquid level.

If it is determined, by the processing circuitry, that liquid is present at a relatively high level there is an immediate risk of discharging, corrosion and other mechanisms leading to thermal event. In case of a determined relatively high level of liquid, an action may be to provide, by the processing circuitry, a warning signal indicating to safely stop the vehicle and evacuate. Such warning signal may cause a warning message inside the vehicle cab, either by visual e.g., on a display, and/or audio warnings.

If it is determined, by the processing circuitry, that the liquid level is present only at a relatively low level, for example, there may be only some humidity on the bottom the cell 102 that does not risk discharging and corroding the cells, there is no immediate danger. Nevertheless, the processing circuitry may be configured to provide a warning signal that causes a warning message to advice service, show a "service needed" message to the driver, or just have a silent fault code for follow-up at next service interval. The fault code may be stored in log data.

Furthermore, one possible action that may be taken, regardless of liquid level, is to cause a discharge circuit to discharge the cells 102 and/or keep the cells 102 at a lower charge level in order to reduce risk of mechanisms leading to a hazardous thermal event.

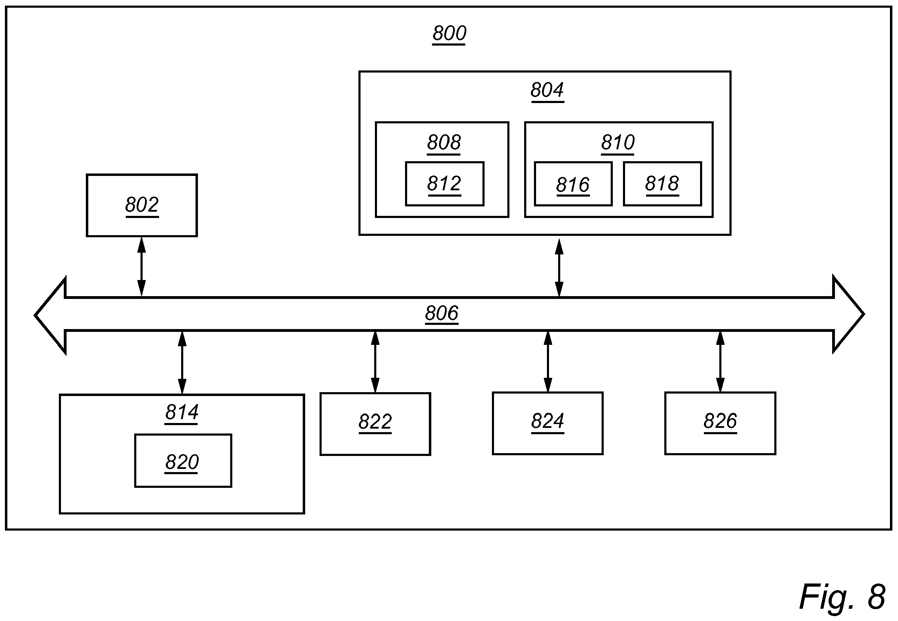

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804**, and a system bus **806**. The computer system **800** may include at least one computing device having the processing circuitry **802**. The system bus **806** provides an interface for system components including, but not limited to, the memory **804** and the processing circuitry **802**. The processing circuitry **802** may include any number of hardware components for conducting data or signal processing or for executing computer code stored in memory **804**. The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802**. A basic input/output system (BIOS) **812** may be stored in the non-volatile memory **808** and can include the basic routines that help to transfer information between elements within the computer system **800**.

The computer system **800** may further include or be coupled to a non-transitory computer-readable storage medium such as the storage device **814**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810**, which may include an operating system **816** and/or one or more program modules **818**. All or a portion of the examples disclosed herein may be implemented as a computer program **820** stored on a transitory or non-transitory computer-usable or computer-readable storage medium (e.g., single medium or multiple media), such as the storage device **814**, which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: An electrical energy storage module comprising: multiple electrical energy storage cells arranged next to each other in a stacking direction, a measurement circuit arranged on a substrate on a top side of the stack of multiple electrical energy storage cells for connection to electrodes of the multiple electrical energy storage cells, wherein, a portion of the substrate of the measurement circuit extends downwards on a side surface of the stack of multiple electrical energy storage cells, the side surface extending away from the top surface, the portion of the substrate comprising at least two conducting surfaces electrically connected with the measurement circuit, and the measurement circuit is configured to detect a variation in electrical resistance between the at least two conducting surfaces caused by a liquid next to the electrical energy storage module.

Example 2: The electrical energy storage module of claim 1, wherein the substrate is flexible.

Example 3: The electrical energy storage module of claim 2, wherein the substrate is a flexible printed circuit board.

Example 4: The electrical energy storage module of any of claims 1-3, wherein the portion of the substrate comprises: at least three conducting surfaces, where at least two of the at least three conducting surfaces are arranged at different distances from an end portion of the substrate.

Example 5: The electrical energy storage module of any of claims 1-4, wherein the substrate is arranged on a plurality of the electrical energy storage cells and is folded from the top side to the side surface of the electrical energy storage module.

Example 6: The electrical energy storage module of any of claims 1-5, wherein the top side is adapted to be arranged substantially horizontal and the side surface is adapted to be arranged substantially vertically.

Example 7: The electrical energy storage module of any of claims 1-6, wherein the measurement circuit is connectable to a control system that is configured to receive measurement signals indicative of the variation in electrical resistance.

Example 8: The electrical energy storage module of any of claims 1-7, comprising an electrical connection part connecting the conducting surfaces and the measurement circuit on the top side of the multiple electrical energy storage cells, the electrical connection part being a high-ohmic part.

Example 9: The electrical energy storage module of any of claims 1-8, wherein the at least two conducting surfaces are fully exposed metal surfaces.

Example 10: A vehicle comprising the electrical energy storage module according to any of claims 1-9.

Example 11: A method for detecting a liquid around an electrical energy storage module comprising multiple electrical energy storage cells arranged next to each other in a stacking direction, and a measurement circuit comprising a substrate arranged on a top side of the multiple electrical energy storage cells for connection to electrodes of the multiple electrical energy storage cells, the method comprising: providing the substrate with a portion that extends downwards on a side surface of the electrical energy storage module, the side surface extending away from the top surface, the portion of the substrate comprising at least two conducting surfaces electrically connected with the measurement circuit, detecting a variation in electrical resistance between the at least two conducting surfaces, and take action depending on the type of variation in the electrical resistance.

Example 12: The method of claim 11, wherein take action includes at least one of warn a user, discharging the electrical energy storage cells, close coolant valves of a cooling system for the electrical energy storage cells, and store a fault code.

Example 13: The method of any of claims 11-12, wherein the portion of the substrate comprises a plurality of pairs of conducting surfaces arranged at different distances from an end portion of the substrate, the method comprising: determining a liquid level depending on evaluating a variation in resistance in each pair of the conducting surfaces.

Example 14: A computer-implemented method, comprising: detecting, by processing circuitry of a computer system, at least one variation in electrical resistance between at least two conducting surfaces of a substrate portion that extends downwards on a side surface of an electrical energy storage module comprising multiple electrical energy storage cells arranged next to each other in a stacking direction, the side surface extending away from a top surface of the stack of multiple electrical energy storage cells, evaluating, by the processing circuitry, at least one variation in electrical resistance in comparison to predetermined criteria, and providing control signals, by processing circuitry, to take action depending on the type of variation in the electrical resistance.

Example 15: The method of claim 14, wherein the control signals are provided to at least one of a system configured to warn a user, discharging the electrical energy storage cells, close coolant valves of a cooling system for the electrical energy storage cells, and store a fault code.

Example 16: The method of any of claims 14-15, wherein the portion of the substrate comprises a at least three conducting surfaces where at least two of the at least three conducting surfaces are arranged at different distances from an end portion of the substrate, the method comprising: determining a liquid level depending on evaluating a variation in resistance between a reference conducting surface and the other two conducting surfaces.

Example 17: The method of claim 16, wherein the action depends on the determined liquid level.

Example 18: A computer program product comprising program code for performing, when executed by the processing circuitry, the method of any of claims 14-17.

Example 19: A non-transitory computer-readable storage medium comprising instructions, which when executed by the processing circuitry, cause the processing circuitry to perform the method of any of claims 14-17.

Example 20: A computer system comprising processing circuitry configured to:
detect at least one variation in electrical resistance between at least two conducting surfaces of a substrate portion of a measurement circuit that extends downwards on a side surface of an electrical energy storage module comprising multiple electrical energy storage cells arranged next to each other in a stacking direction, the side surface extending away from the top surface where the measurement circuit is connected to electrodes of the multiple electrical energy storage cells, evaluate at least one variation in electrical resistance in comparison to predetermined criteria, and provide control signals to electrical energy control systems to take an action depending on the type of variation in the electrical resistance.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical energy storage module (100) comprising:
multiple electrical energy storage cells (102) arranged next to each other in a stacking direction (104),
a measurement circuit (108) arranged on a substrate (110) on a top side (112) of the stack of multiple electrical energy storage cells for connection to electrodes (116) of the multiple electrical energy storage cells (102), wherein,
a portion (120) of the substrate of the measurement circuit extends downwards on a side surface (122) of the stack of multiple electrical energy storage cells, the side surface extending away from the top surface, the portion of the substrate comprising at least two conducting surfaces (124, 126) electrically connected with the measurement circuit, and the measurement circuit (108) is configured to detect a variation in electrical resistance between the at least two conducting surfaces (124, 126) caused by a liquid next to the electrical energy storage module.

2. The electrical energy storage module of claim 1, wherein the substrate is flexible.

3. The electrical energy storage module of any of claims 1-2, wherein the portion of the substrate comprises:
at least three conducting surfaces (124, 126, 128), where at least two of the at least three conducting surfaces are arranged at different distances from an end portion (130) of the substrate.

4. The electrical energy storage module of any of claims 1-3, wherein the substrate is arranged on a plurality of the electrical energy storage cells (102) and is folded from the top side (112) to the side surface (122) of the electrical energy storage module.

5. The electrical energy storage module of any of claims 1-4, wherein the top side is adapted to be arranged substantially horizontal and the side surface is adapted to be arranged substantially vertically.

6. The electrical energy storage module of any of claims 1-5, wherein the measurement circuit is connectable to a control system that is configured to receive measurement signals indicative of the variation in electrical resistance.

7. The electrical energy storage module of any of claims 1-6, comprising an electrical connection part connecting the conducting surfaces and the measurement circuit on the top side of the multiple electrical energy storage cells, the electrical connection part being a high-ohmic part.

8. The electrical energy storage module of any of claims 1-7, wherein the at least two conducting surfaces are fully exposed metal surfaces.

9. A vehicle (140) comprising the electrical energy storage module according to any of claims 1-8.

10. A method for detecting a liquid around an electrical energy storage module comprising multiple electrical energy storage cells arranged next to each other in a stacking direction, and a measurement circuit arranged on a substrate on a top side of the multiple electrical energy storage cells for connection to electrodes of the multiple electrical energy storage cells, the method comprising:
providing (S102) the substrate with a portion that extends downwards on a side surface of the electrical energy storage module, the side surface extending away from the top surface, the portion of the substrate comprising at least two conducting surfaces electrically connected with the measurement circuit,
detecting (S104) a variation in electrical resistance between the at least two conducting surfaces, and
take action (S106) depending on the type of variation in the electrical resistance.

11. The method of claim 10, wherein take action includes at least one of warn a user, discharging the electrical energy storage cells, close coolant valves of a cooling system for the electrical energy storage cells, and store a fault code in a memory.

12. The method of any of claims 10-11, wherein the portion of the substrate comprises a at least three conducting surfaces where at least two of the at least three conducting surfaces are arranged at different distances from an end portion (130) of the substrate, the method comprising:
determining a liquid level depending on evaluating a variation in resistance between a reference conducting surface (124) and the other two conducting surfaces (126, 128).

13. A computer-implemented method, comprising:
detecting (S202), by processing circuitry of a computer system, at least one variation in electrical resistance between at least two conducting surfaces of a substrate portion that extends downwards on a side surface of an electrical energy storage module comprising multiple electrical energy storage cells arranged next to each other in a stacking direction, the side surface extending away from a top surface of the stack of multiple electrical energy storage cells,
evaluating, (S204) by the processing circuitry, at least one variation in electrical resistance in comparison to predetermined criteria, and
providing (S206) control signals, by processing circuitry, to take action depending on the type of variation in the electrical resistance.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 14.
